# EUROPÄISCHE PATENTANMELDUNG

(11) **EP 1 122 935 A2**
(43) Veröffentlichungstag der Anmeldung: **08.08.2001**
(21) Anmeldenummer: 01102280.3
(22) Anmeldetag: 31.01.2001
(51) Int. Cl.: H04M 3/42

(54) **Computergesteuerte Nebenstellenanalage**

(30) Priorität: 01.02.2000 DE 10004165
(71) Anmelder: Tenovis GmbH & Co. KG, 60326 Frankfurt (DE)
(72) Erfinder: Haack, Reiner, Canada TOG1E0 (CA)
(74) Vertreter: Leson, Thomas Johannes Alois, Dipl.-Ing.

(57) **Zusammenfassung**

Kommunikationseinheit, die insbesondere für die Versorgung eines Krankenhausbettes mit Diensten wie Telefon, Schwesternrufsignal, Ton von Radio und/oder Fernsehen sowie Fernsehfernsteuerung geeignet ist. Die genannten Dienste werden dabei vom Patientenplatz mit Hilfe eines digitalen Telefons (2) gesteuert, welches mit einer digitalen Nebenstellenanlage (4) verbunden ist. Weiterhin ist mit der Nebenstellenanlage ein Mikrocomputer (9) gekoppelt, welcher vom Telefon (2) gesteuert werden kann und dabei verschiedene ausgewählte Dienste ausführt. Die Verbindung des Telefons (2) mit einem Tonkanal erfolgt, indem die Leitung vom Telefon (2) in eine Warteschleife gelegt und der gewünschte Tonkanal als Ansagetext auf die Warteposition des Anrufs geschaltet wird.

## Beschreibung

### Technisches Gebiet

Die Erfindung betrifft eine multifunktionale Kommunikationseinheit zur Versorgung mindestens eines Benutzerplatzes mit Diensten wie Fernsprechmöglichkeit, Radio und/oder Fernsehen sowie einem Rufdienst, enthaltend eine Nebenstellenanlage und mindestens ein hiermit verbundenes, am Benutzerplatz anzuordnendes Telefonendgerät.

### Stand der Technik

Kommunikationseinheiten der eingangs genannten Art werden insbesondere an Krankenhausbetten benötigt. Nach dem Stand der Technik erfolgt dabei die Versorgung eines solchen Patientenplatzes durch unabhängige Endgeräte, zum Beispiel
- Ruftaste für die Schwester
- Telefon
- Gegensprechanlage
- Kopfhörer für Radio und/oder Fernsehen
- Fernbedienung für Radio und/oder Fernsehen
- Lautsprecher für Durchsagen
- Lesegerät für Telefonkarten, sofern diese nicht im Endgerät integriert sind.

Alle genannten Komponenten benötigen eine eigenständige Verkabelung und in der Regel auch selbständige Geräte. Es liegt auf der Hand, dass hierdurch ein erheblicher Kostenaufwand entsteht. Ferner treten durch die Vielzahl der Geräte auch Behinderungen am Krankenbett ein.

### Darstellung der Erfindung, Aufgabe, Lösung, Vorteile

Aufgabe der vorliegenden Erfindung war es, eine multifunktionale Kommunikationseinheit zur Verfügung zu stellen, die insbesondere zur Versorgung eines Krankenhausplatzes geeignet ist und die hinsichtlich ihres Installations- und Wartungsaufwandes erheblich vereinfacht ist.

Diese Aufgabe wird durch eine multifunktionale Kommunikationseinheit mit den Merkmalen des Anspruches 1 gelöst.

Die Kommunikationseinheit dient demnach der Versorgung mindestens eines Benutzerplatzes, insbesondere eines Bettplatzes in einem Krankenhaus, mit Diensten verschiedener Art wie zum Beispiel einer Fernsprechmöglichkeit, Radio und/oder Fernsehen oder einem Rufdienst für Pflegepersonal, wobei die Kommunikationseinheit eine Nebenstellenanlage und mindestens ein mit der Nebenstellenanlage verbundenes und am Benutzerplatz anzuordnendes Telefonendgerät umfasst. Die Kommunikationseinheit ist dadurch gekennzeichnet, dass mit der Nebenstellenanlage ein Gerät zur elektronischen Datenverarbeitung (Mikrocomputer) angeschlossen ist, wobei dieser Mikrocomputer von dem Telefonendgerät am Benutzerplatz derart ansteuerbar ist, dass er die gewünschten Dienste am Benutzerplatz bereitstellt.

Gemäß Anspruch 2 kann der Mikrocomputer insbesondere folgende Funktionen ausführen:
a) Steuerung eines am Benutzerplatz angeordneten Femsehens, das heißt insbesondere Ein- und Ausschalten, Kanalwahl, Lautstärkeregelung etc.;
b) Auslösen eines Rufsignals an das Pflegepersonal;
c) Auswählen eines Tonkanals von Radio oder Fernsehen und Verbinden des Telefonendgerätes mit dem ausgewählten Tonkanal.

Bei der erfindungsgemäßen Kommunikationseinheit wird demnach ein in der Regel ohnehin am Benutzerplatz angeordnetes Telefonendgerät und eine zugehörige Nebenstellenanlage dazu genutzt, die gewünschten Dienste am Benutzerplatz, zum Beispiel einem Krankenhausbett, zur Verfügung zu stellen. Dies hat den Vorteil, dass am Benutzerplatz lediglich ein Gerät aufzustellen ist, nämlich das Telefon. Hierüber kann der Benutzer alle gewünschten Dienste aufrufen, steuern und empfangen, wobei die entsprechenden Vermittlungen von einem Mikrocomputer und der Nebenstellenanlage zur Verfügung gestellt werden. Am Benutzerplatz selbst kommt man somit mit erheblich weniger Endgeräten und Verkabelungen aus, was verständlicherweise eine entsprechende Kosteneinsparung einbringt. Dies betrifft sowohl die Anschaffungskosten als auch die Wartungskosten, da nurmehr die Telefonendgeräte und eine zentrale Nebenstellenanlage sowie ein zentraler Mikrocomputer zu warten sind.

Bei einer speziellen Ausgestaltung der Kommunikationseinheit gemäß Anspruch 3 können akustisch übermittelte Dienste wie insbesondere Radio- und/oder Fernsehtonkanäle als Hörtöne in die Nebenstellenanlage eingespeist werden.

Dabei werden die Hörtöne gemäß Anspruch 4 in der Nebenstellenanlage vorzugsweise anstelle von Ruftönen, Wähltönen und/oder Warteschleifen-Ansagetexten mit dem Telefonendgerät verbunden. Dies hat den Vorteil, dass in der Nebenstellenanlage selbst keine Veränderungen erforderlich sind, so dass auch bereits vorhandene Anlagen verwendet werden können. Es reicht, zum Beispiel eine fiktive Verbindung des Telefonendgerätes mit der Warteschlange (Queue) herzustellen, die die vermittlungstechnischen Grundfunktionen gewährleistet.

Dabei-werden die Rädio- und oder Fernsehtonkanäle zum Beispiel als Warteschleifen-Ansagetexte in die Nebenstellenanlage eingespeist und die Verbindung des Telefonendgerätes mit einem dieser Kanäle ist herstellbar, indem die Leitung vom Telefonendgerät auf die entsprechende Warteschleife gelegt wird. Nebenstellenanlagen haben in der Regel die Möglichkeit, auf einen eingehenden Anruf einen Ansagetext zu legen, was insbesondere dann benutzt wird, wenn aufgrund einer Auslastung der zur Verfügung stehenden Anschlüsse der eingehende Anruf nicht sofort weitervermittelt werden kann. In der Regel wird der eingehende Anruf dabei nur so lange mit dem Ansagetext verbunden, bis ein freier Anschluss zur Verfügung steht (Warteschleife). Bei dem erfindungsgemäßen Gerät werden dagegen die von den Telefonendgeräten an den Benutzerplätzen eingehenden Anrufe auf Dauer mit den Ansagetexten verbunden, das heißt insbesondere so lange, bis diese Verbindung auf Initiative des Anrufers (Benutzers) beendet wird. Als Ansagetexte werden dabei Radiokanäle oder Fernsehtonkanäle eingespeist, wobei vom Telefonendgerät aus zuvor der gewünschte Kanal ausgewählt worden ist.

Gemäß Anspruch 5 handelt es sich bei der Nebenstellenanlage vorzugsweise um eine digitale Nebenstellenanlage. Derartige Anlagen bieten die notwendige Flexibilität zur Verwirklichung der oben genannten Dienste und sind dabei durch Software zu steuern.

### Kurze Beschreibung der Zeichnungen

Im folgenden wird die Erfindung mit Hilfe zweier Figuren beispielhaft erläutert. Es zeigen:
- Fig. 1: eine Kommunikationseinheit und die Signalwege bei der Ansteuerung eines Fernsehgerätes;
- Fig. 2: die Kommunikationseinheit und die Verbindungswege zu den Tonkanälen von Radio und/oder Fernsehen.

### Bester Weg zur Ausführung der Erfindung

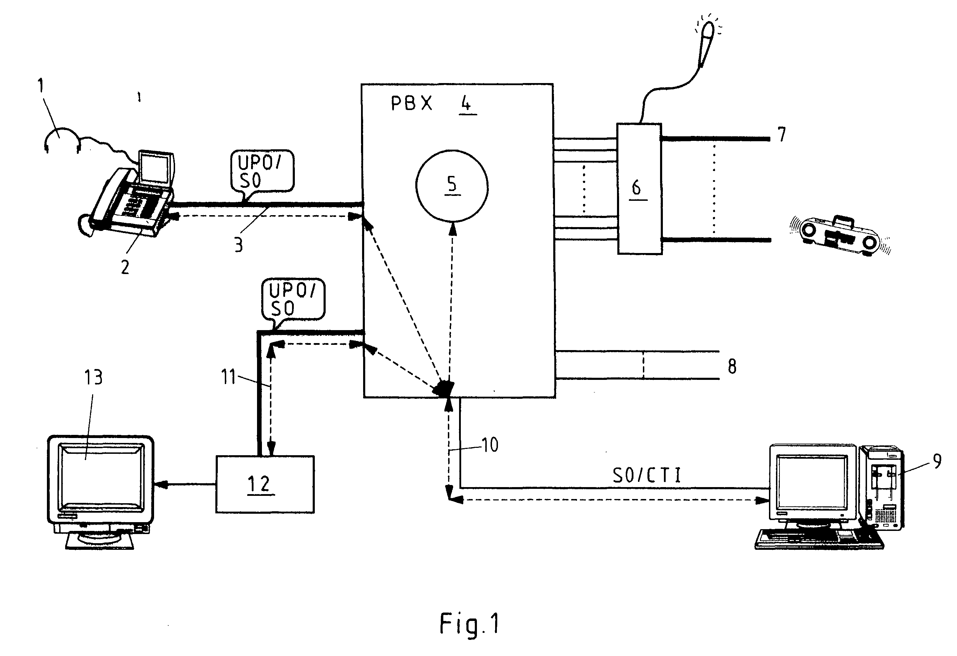

In Figur 1 ist ein digitales Telefonendgerät 2 zu erkennen, an welches ein Kopfhörer 1 angeschlossen ist. Das Telefonendgerät 2 kann insbesondere an einem Patientenbett im Krankenhaus aufgestellt sein. Es ist über eine digitale Leitung 3 mit einer digitalen Nebenstellenanlage 4 (private branch exchange PBX) verbunden. Die Verbindung kann dabei über die ISDN Protokolle UPO bzw. S0 erfolgen. UP0 ist ein Protokoll wie S0 mit unterschiedlichen Schichten 1 und 2.

Mit der Nebenstellenanlage 4 ist neben den Amtsleitungen 8 weiterhin ein Mikrocomputer 9 (PC) verbunden, welcher Einfluss auf die Vermittlungstätigkeit in der Nebenstellenanlage 4 nehmen kann. Dies geschieht über eine Datenleitung 10, die mit einem S0/CTI (Computer Telecommunication Integration) Protokoll betrieben wird. Ebenso wäre zur Verbindung ein anderes LAN (local area network) wie zum Beispiel ein Ethernet geeignet.

Mit der Nebenstellenanlage 4 ist weiterhin eine Steuereinheit 12 über ein UP0/S0 Protokoll verbunden, die wiederum mit dem Monitor 13 eines Fernsehgerätes verbunden ist.

Die Steuerung des Fernsehgerätes 13 vom Telefon 2 aus geschieht nun so, dass das Telefon 2 über die Nebenstellenanlage 4 eine Verbindung zum Mikrocomputer 9 herstellt. Auf diesem läuft ein entsprechendes Programm ab, welches ein Menü anbietet, das mit Hilfe der Tastatur des Telefons 2 bedient werden kann. Über entsprechende Eingaben an der Tastatur des Telefons 2 kann der Patient insbesondere das Fernsehgerät 13 fernbedienen, also ein- oder ausschalten, ein bestimmtes Programm wählen oder andere Parameter verändern. Wenn die Auswahl über die Tastatur erfolgt ist, sorgt das Programm auf dem Mikrocomputer 9 für die Umsetzung der entsprechenden Befehle. Zu diesem Zweck wird über die Datenleitungen 10 und 11 und die Nebenstellenanlage 4 eine Verbindung zur Steuereinheit 12 aufgebaut und die entsprechenden Kommandos an die Steuereinheit werden übermittelt. Die Steuereinheit 12 übernimmt dann die Aufbereitung und Ausführung der per Datenprotokoll übermittelten Kommandos am Fernsehgerät 13. Zu diesem Zweck kann sie im einfachsten Fall ein Infrarotsignal zum Fernsehgerät 13 übermitteln.

Auf dem beschriebenen Verbindungsweg können auch andere Funktionen wie zum Beispiel ein Schwesternruf ausgeübt werden. In diesem Falle würde die Steuereinheit 12 statt eines Fernsehers ein entsprechendes Signalgerät wie zum Beispiel eine Glocke oder eine Blinkleuchte betätigen.

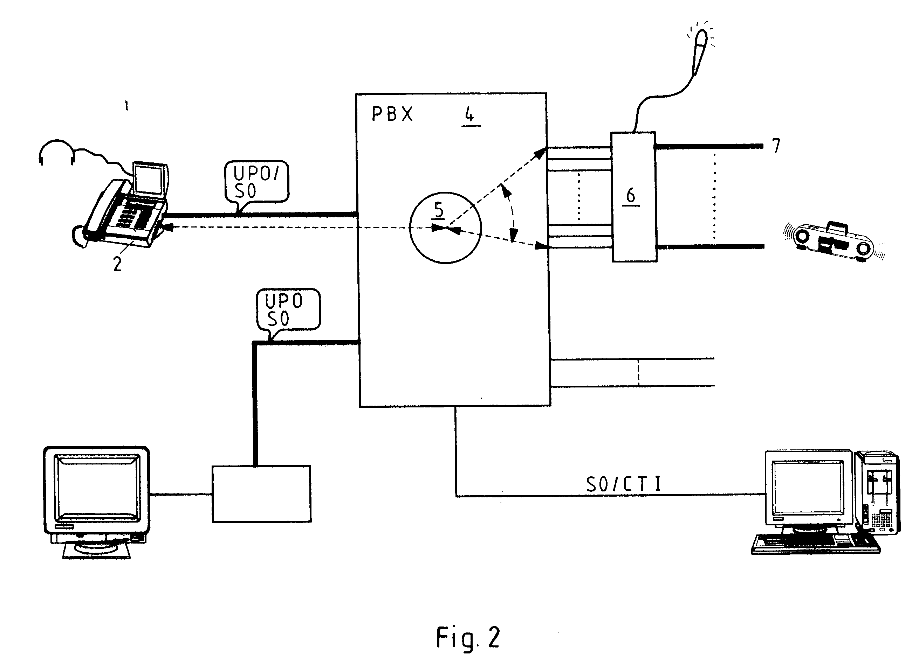

Figur 2 zeigt für dieselbe Kommunikationseinheit die Verbindungswege, welche bei einer Verbindung des Telefonendgerätes 2 mit dem Tonkanal von Radio oder Fernsehen aktiv sind. Die Verbindung verläuft dabei über ein sogenanntes Queue-Device 5, das heißt eine Warteschlangen-Steuerung. Hierbei handelt es sich um eine in der Nebenstellenanlage ausgebildete Funktion, die der Verwaltung eingehender Anrufe dient, welche nicht sofort an freie Anschlüsse weitervermittelt werden können. Derartige Anrufe werden so lange in der Warteschlange geparkt, bis die gewünschte Verbindungsleitung frei ist. Dabei werden in der Regel während der Wartezeit den eingehenden Anrufen Ansagetexte oder Wartemusik eingespielt. Im Rahmen der vorliegenden Erfindung wird die Warteschlange jedoch (zusätzlich) dazu genutzt, das Telefon 2 mit einem gewünschten Tonkanal für eine gewünschte Dauer zu verbinden. Zu diesem Zweck sind die zur Verfügung stehenden Tonkanäle 7 von Radio und Fernsehen sowie darüber hinaus eine Mikrofoneingabe für Durchsagen mit einer Steuereinheit 6 verbunden, welche ihrerseits mit der Nebenstellenanlage 4 verbunden ist. Die Steuereinheit 6 dient dazu, die unterschiedlichen Ansagegeräte wie die Radiokanäle oder Mikrofondurchsage den Eingangssignalen für die Hörtöne anzupassen. Dies können unterschiedliche Steuerungen sein je nachdem, wie die Hörtöne in der Anlag beschaltet werden.

Die Herstellung einer Verbindung über den B-Kanal gemäß Figur 2 beginnt damit, dass über das Telefon 2 zunächst eine Verbindung zur Datenkommunikation mit dem Mikrocomputer 9 aufgebaut wird. Durch eine entsprechende Menüauswahl kann dann vom Telefon 2 ausgewählt werden, mit welchem Tonkanal eine Verbindung gewünscht ist. Der Mikrocomputer 9 verbindet daraufhin das Telefon 2 über eine UPO-beziehungsweise S0-Leitung mit der Warteschlange 5. Weiterhin schaltet er den gewünschten Kanal als Ansage auf die Warteposition, in welcher sich die Verbindung zum Telefon 2 verbindet. Die Steuerung der Warteschlange 5 vom Rechner aus geschieht über sog. Computer Supported Telecommunication Applications (CSTA).

Auch das Fernsehgerät 13 kann prinzipiell über eine Verbindung der oben beschriebenen Art gesteuert werden, was allerdings eine Steuereinheit voraussetzt, die ein S0-Protokoll versteht. Gegebenenfalls kann hier auch ein besonderer T1 (Telefonfamilie der Firma Bosch, Deutschland) vorgesehen werden.

Kommunikationseinheit, die insbesondere für die Versorgung eines Krankenhausbettes mit Diensten wie Telefon, Schwesternrufsignal, Ton von Radio und/oder Fernsehen sowie Fernsehfernsteuerung geeignet ist. Die genannten Dienste werden dabei vom Patientenplatz mit Hilfe eines digitalen Telefons (2) gesteuert, welches mit einer digitalen Nebenstellenanlage (4) verbunden ist. Weiterhin ist mit der Nebenstellenanlage ein Mikrocomputer (9) gekoppelt, welcher vom Telefon (2) gesteuert werden kann und dabei verschiedene ausgewählte Dienste ausführt. Die Verbindung des Telefons (2) mit einem Tonkanal erfolgt, indem die Leitung vom Telefon (2) in eine Warteschleife gelegt und der gewünschte Tonkanal als Ansagetext auf die Warteposition des Anrufs geschaltet wird.

## Patentansprüche

1. Multifunktionale Kommunikationseinheit zur Versorgung mindestens eines Benutzerplatzes mit Diensten wie Fernsprechmöglichkeit, Radio und/oder Fernsehen oder einem Rufdienst, enthaltend eine Nebenstellenanlage (4) und mindestens ein hiermit verbundenes und am Benutzerplatz anzuordnendes Telefonendgerät (2),
dadurch gekennzeichnet, dass die Kommunikationseinheit einen mit der Nebenstellenanlage verbundenen Mikrocomputer (9) enthält, welcher von dem Telefonendgerät (2) derart ansteuerbar ist, dass er die gewünschten Dienste am Benutzerplatz bereitstellt.

2. Kommunikationseinheit nach Anspruch 1,
dadurch gekennzeichnet, dass der Mikrocomputer (9)
a) einen am Benutzerplatz angeordneten Fernseher (13) steuern kann,
b) ein Rufsignal auslösen kann,
c) einen angewählten Radio- und/oder Fernsehtonkanal (7) mit dem Telefonendgerät (2) verbinden kann.

3. Kommunikationseinheit nach Anspruch 1 oder 2,
dadurch gekennzeichnet, dass sie so ausgelegt ist, dass akustisch übermittelte Dienste wie insbesondere Radio- und/oder Fernsehtonkanäle (7) als Hörtöne in die Nebenstellenanlage (4) eingespeist werden können.

4. Kommunikationseinheit nach Anspruch 3,
dadurch gekennzeichnet, dass sie so ausgelegt ist, dass die Hörtöne in der Nebenstellenanlage (4) anstelle von Ruftönen, Wähltönen und/oder Warteschleifen-Ansagetexten mit dem Telefonendgerät (2) verbunden werden können.

5. Kommunikationseinheit nach einem der Ansprüche 1 bis 4,
dadurch gekennzeichnet, dass sie eine digitale Nebenstellenanlage (4) enthält.
